# EUROPEAN PATENT APPLICATION

(11) **EP 4 852 337 A1**
(43) Date of publication of application: **09.12.2026**
(21) Application number: 25180279.9
(22) Date of filing: 02.06.2025
(51) Int. Cl.: H04B 7/0456, H04L 27/26

(54) **TRANSMITTER DEVICE FOR A COMMUNICATION SYSTEM**

(71) Applicant: Imec VZW, 3001 Leuven (BE); Universiteit Gent, 9000 Gent (BE)
(72) Inventor: MOHAMED ISMAIL, Abdur Rahman, 3000 Leuven (BE); GUENACH, Mamoun, 1800 Vilvoorde (BE)
(74) Representative: Sarlet, Stephanie

(57) **Abstract**

The present disclosure provides a transmitter device comprising an analog precoder configured to receive information carrying signals via a signal processing chain and to control the transmission of the information carrying signals by at least one of the at least two antennas, and a controller configured to compute a perturbation signal (PS) and an analog beamforming signal (Φ) based on at least channel state information. The controller is configured to send the perturbation signal (PS) as one of the information carrying signals to the analog precoder, and the controller is further configured to send the analog beamforming signal (Φ) to the analog precoder to control the transmission of the information carrying signals by at least one of the at least two antennas. The present disclosure further provides a communication system comprising such a transmitter device and a method to control transmission of information carrying signals from a transmitter device to at least one user or receiver.

## Description

### Field of the disclosure

The present disclosure relates to a transmitter device for a communication system, to a communication system comprising such a transmitter device and to a method to control transmission of information carrying signals from a transmitter device to at least one user or receiver.

### Background art

Traditional communication systems often use fully digital beamforming where each Radio frequency (RF) chain is attached to one antenna. However, such a system has a prohibitive cost and power consumption, especially for applications like high frequency communication, which demands a large number of transmit and receive antennas. In such cases, hybrid beamforming may be a good alternative to digital beamforming. This is because in hybrid beamforming the number of RF chains is less than the number of antennas, whereas the communication performance is very close to the fully digital beamforming.

In, for example, mm Wave communication systems, the analog front-end must be designed with energy-efficient power amplifiers. The input signal of the power amplifier with high-peak-to-average power ratio (PAPR) forces the transmitter to operate with power amplifiers in a highly non-linear region, which reduces their efficiency. Further, non-linear operation leads to distortion, signal degradation, and higher power consumption.

In a communication system, the power amplifier attached to each antenna element is a critical device that amplifies the RF pass-band signal before it is radiated. However, the power amplifier has a non-linear input-output relationship. Therefore, if the signal entering the power amplifier has a larger PAPR, the power amplifier creates a distorted output signal and causes an out-of-band distortion. The distorted output signal reduces the performance of the communication systems at the receiver or user and the out-of-band distortion disturbs the users operating in the adjacent spectrum. To overcome these effects, the input signal of the power amplifier, depending on its PAPR, will be-a subject to a power backoff which in turn leads to sacrifice the power amplifier efficiency.

Further, communication systems are often vulnerable to eavesdroppers. Such eavesdroppers attempt to intercept the communication between transmitter and the receiver or user, which can be detrimental in, for example, indoor environments. Eavesdropper can have many antennas allowing him to (reliably) decode the communication data. Hence there is a need for a technical solution to secure the communication links. mmWave communication relies to a large extent on analog beamforming to harvest the beamforming gain and improve the link quality. With limited RF resources, the beams have certain width leading to beam-leakage towards eavesdroppers, hence jeopardizing the trustworthiness of the communication.

### Summary of the disclosure

It is an aim of the present disclosure to provide a transmitter device that is able to control transmission of information carrying signals to a user or a receiver to at least reduce or minimize distortion on the information carrying signals received by the user or receiver.

It is further aim of the present disclosure to provide a transmitter device that is able to control transmission of information carrying signals to a user or a receiver to at least improve security of a communication system comprising the transmitter device against eavesdropper attacks.

It is still a further aim of the present disclosure to provide a transmitter device that is able to control transmission of information carrying signals to a user or a receiver to reduce or minimize distortion on the information carrying signals received by the user or receiver and to improve security of a communication system comprising the transmitter device against eavesdropper attacks.

In a first aspect, which may be combined with other aspects and/or embodiments described herein, the present disclosure relates to a transmitter device comprising an analog precoder configured to receive first information carrying signals via a signal processing chain for converting digital information carrying signals to analog information carrying signals and to control the transmission of the information carrying signals by at least one of at least two antennas. The transmitter device further comprises a controller configured to compute at least one perturbation signal and an analog beamforming signal based on at least channel state information of at least one user or receiver. The controller is configured to send the at least one perturbation signal as a second information carrying signal to the analog precoder. Therefore at least one of the signal processing chains is reserved to only receive the computed perturbation signal and send it to the analog precoder. The other signal processing chains are configured to transmit the first information carrying signals to the analog precoder. and to send the analog beamforming signal to the analog precoder to control the transmission of the information carrying signals by the at least one of the at least two antennas to a number of users or receivers.

In a transmitter device according to embodiments of the present disclosure, properties of information carrying signals leaving the analog precoder are changed. In other words, the properties of the output signal of the analog precoder are altered. This is done in such a way that a transmitter device according to embodiments of the present disclosure is able to reduce peak-to-average-power ratio of information carrying signals that are sent from the transmitter device to the users or receivers and/or to improve security of a communication system, in which the transmitter device according to embodiments of the present disclosure is provided, against eavesdropper attacks.

According to embodiments of the present disclosure, the controller may further be configured to receive parameters of the signal processing chain and/or use information from the information carrying signals for computing the perturbation signal and the analog beamforming signal.

According to the present disclosure, three levels of computing the perturbation signal and the analog beamforming signal can be distinguished, each level having a different influence on the output signal of the analog precoder. According to a first level, the perturbation signal and the analog beamforming signal may be computed by using only channel state information. The output signal of the analog precoder may, according to this first level computation, be changed in such a way that security in the information carrying signals that is sent to the user or receiver is increased, or in other words that eavesdropper links are jeopardized. According to a second level, the perturbation signal and the analog beamforming signal may be computed by using channel state information and information from the information carrying signals. According to the second level computation, the output signal of the analog precoder may be changed in such a way that the security is increased and/or the peak-to-average-power ratio is reduced. According to a third level computation, channel state information, information from the information carrying signals and signal processing chain characterization may be used to compute the perturbation signal and the analog beamforming signal. According to the third level computation, security of the output signal of the analog precoder may be further increased and the peak-to-average-power ratio may be further reduced.

The level of computation may be determined depending on the application of the transmitter and what level of security and peak-to-average-power ratio is required for that application.

According to further embodiments, the controller may further be configured to send at least one additional perturbation signal as an information carrying signal to be combined with one of the information carrying signals before sending it to the analog precoder. In other words, an additional perturbation signal may be added to at least one of the information carrying signals before these information carrying signals are sent to the analog precoder.

The number of antennas in a transmitter device according to embodiments of the present disclosure may be higher than the number of information carrying signals. In embodiments of the disclosure where the signal processing chain may comprise at least two RF chains, the number of antennas may be higher than the number of RF chains.

The transmitter device may further comprise at least one power amplifier in between the analog precoder and the at least two antennas. According to embodiments of the disclosure, the number of power amplifiers may be equal to the number of antennas and each antenna may be connected to a power amplifier. According to other embodiments of the disclosure, the number of power amplifiers may be lower than the number of antennas and oner one more antennas may be connected to a same power amplifier.

According to embodiments of the present disclosure, at least some of the information carrying signals may be predetermined signals. According to other embodiments of the disclosure, the information carrying signals may comprise communication or data streams.

The perturbation signal may, according to embodiments of the present disclosure, be computed to minimize interference caused by the perturbation signal on the information carrying signals received by at least one receiver or user.

The analog beamforming signal may be computed so that the perturbation signal is transmitted towards an eavesdropper to distort the reception of the information carrying signals.

According to embodiments of the present disclosure, the transmitter device may comprise an analog precoder configured to receive first information carrying signals via at least two signal processing chains to control the transmission of the information carrying signals by at least one of the at least two antennas to at least one user or receiver. The transmitter device may further comprise a controller configured to compute a perturbation signal and an analog beamforming signal based on at least channel state information and the information carrying signals. The controller is further configured to send the perturbation signal as at least one second information carrying signal to the analog precoder. Therefore at least one of the at least two signal processing chains is reserved to only receive the computed perturbation signal and send it to the analog precoder. The other signal processing chains of the at least two signal processing chains are configured to transmit the first information carrying signals to the analog precoder. The controller is further configured to send the analog beamforming signal to the analog precoder to control or the alter the transmission of the information carrying signals by at least one of the at least two antennas to a number of users or receivers.

According to embodiments of the present disclosure, the transmitter device may comprise an analog precoder configured to receive first information carrying signals, i.e. communication or data streams, via at least two RF chains to control the transmission of the information carrying signals, e.g. communication or data streams, by at least one of the at least two antennas to at least one user or receiver. The transmitter device may further comprise a controller configured to compute a perturbation signal and an analog beamforming signal based on at least channel state information and the information carrying signals, i.e. communication or data streams. The controller is configured to send the perturbation signal as at least one second information carrying signal to the analog precoder. Therefore at least one of the at least two RF chains is reserved to only receive the computed perturbation signal and send it to the analog precoder. The other RF chains of the at least two RF chains are configured to transmit the first information carrying signals, e.g. communication or data streams, to the analog precoder. The controller is further configured to send the analog beamforming signal to the analog precoder to control the transmission of the information carrying signals, e.g. communication or data streams, by at least one of the at least two antennas to a number of users or receivers.

In a transmitter device according to these embodiments of the present disclosure, properties of information carrying signals leaving the analog precoder are changed. This is done in such a way that a transmitter device according to embodiments of the present disclosure is able to reduce peak-to-average-power ratio of information carrying signals that are sent from the transmitter device to the users or receivers.

According to further embodiments of the present disclosure, the transmitter device may comprise an analog precoder configured to receive first information carrying signals, e.g. communication or data streams, via at least two RF chains to control the transmission of the information carrying signals, e.g. communication or data streams, by at least one of the at least two antennas to at least one user or receiver. The transmitter device may further comprise a controller configured to compute a perturbation signal and an analog beamforming signal based on at least channel state information of a user or a receiver and of at least one eavesdropper. The controller is configured to send the perturbation signal as at least one second information carrying signal to the analog precoder. Therefore at least one of the at least two RF chains is reserved to only receive the computed perturbation signal and send it to the analog precoder. The other RF chains of the at least two RF chains are configured to transmit the first information carrying signals, e.g. communication or data streams, to the analog precoder. The controller is further configured to send the analog beamforming signal to the analog precoder to control the transmission of the information carrying signals, e.g. communication or data streams, by at least one of the at least two antennas to a number of users or receivers.

In a transmitter device according to these embodiments of the present disclosure, properties of information carrying signals leaving the analog precoder are changed. This is done in such a way that a transmitter device according to embodiments of the present disclosure is able to improve security of a communication system, in which the transmitter device according to embodiments of the present disclosure is provided, against eavesdropper attacks.

In a second aspect, which may be combined with other aspects and/or embodiments described herein, the present disclosure relates to a communication system comprising a transmitter device according to the present disclosure.

In a third aspect, which may be combined with other aspects and/or embodiments described herein, the present disclosure relates to a method to control transmission of information carrying signals from a transmitter device to at least one user or receiver. The method comprises sending first information carrying signals to an analog precoder via a signal processing chain, in a controller of the transmitter device, computing a perturbation signal and an analog beamforming signal based on at least channel state information of a user or a receiver, sending the perturbation signal to the analog precoder as a second information carrying signal, and sending the analog beamforming signal to the analog precoder to control the steering of the at least one of the at least two antennas or, in other words, to control the transmission of the information carrying signals by at least one of the at least two antennas.

Computing the perturbation signal and the analog beamforming signal may further be based on signal processing chain characterization and/or information from the information carrying signals.

According to embodiments of the disclosure, the method may further comprise sending an additional perturbation signal to be combined with first information carrying signals before sending it to the analog precoder.

### Brief description of the drawings

Embodiments of the present disclosure will be discussed in more detail below, with reference to the attached drawings.

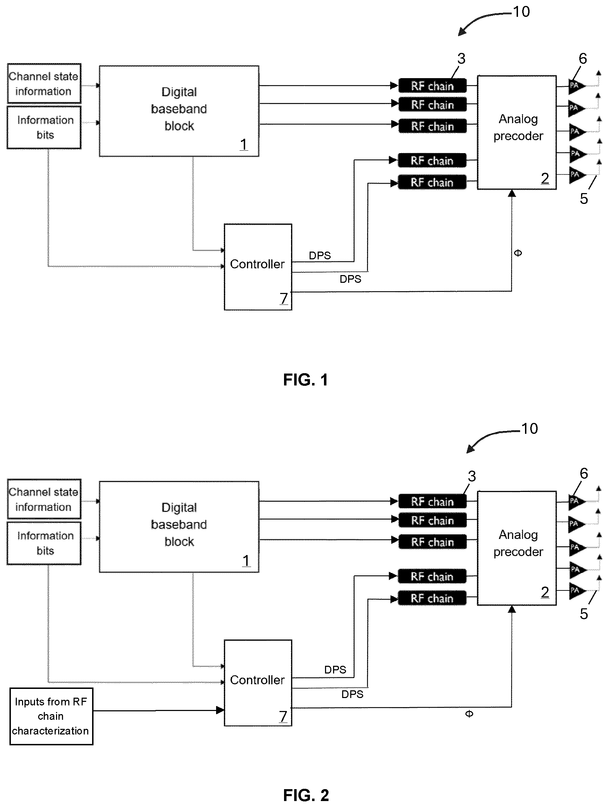

Figs. 1 to 8 schematically illustrate transmitter devices according to different embodiments of the present disclosure.

### Description of embodiments

Below, particular embodiments according to the disclosure are described with reference to certain drawings but the disclosure is not limited thereto. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

The terms first, second, third and the like in the description and in the claims, are used for distinguishing between similar elements and not necessarily for describing a sequential or chronological order. The terms are interchangeable under appropriate circumstances and the embodiments of the disclosure can operate in other sequences than described or illustrated herein.

The terms top, bottom, over, under and the like in the description and the claims are used for descriptive purposes and not necessarily for describing relative positions. The terms so used are interchangeable under appropriate circumstances and the embodiments of the disclosure described herein can operate in other orientations than described or illustrated herein.

Furthermore, the various embodiments, although referred to as "preferred" are to be construed as exemplary manners in which the disclosure may be implemented rather than as limiting the scope of the disclosure.

The present disclosure relates to transmitter device comprising an analog precoder configured to receive information carrying signals via a signal processing chain for converting digital information carrying signals to analog information carrying signals and to control transmission of the information carrying signals by at least one of at least two antennas, and a controller configured to compute a perturbation signal and an analog beamforming signal based on at least channel state information from at least one user or receiver. The controller is configured to send the perturbation signal PS as one of the information carrying signals to the analog precoder and to send the analog beamforming signal to the analog precoder to control the transmission of the information carrying signals by the at least one of the at least two antennas.

In a transmitter device according to embodiments of the present disclosure, properties of information carrying signals leaving the analog precoder are changed. This is done in such a way that a transmitter device according to embodiments of the present disclosure is able to reduce peak-to-average-power ratio of information carrying signals that are sent from the transmitter device to the users or receivers and/or to improve security of a communication system, in which the transmitter device according to embodiments of the present disclosure is provided, against eavesdropper attacks. In other words, according to different embodiments of the present disclosure, the PS signal and the analog beamforming signal are used to shape the information carrying signals to either improve the peak-to-average-power ratio or jeopardizing eavesdropper links.

Three levels of computing the perturbation signal and the analog beamforming signal, or in other words, three levels of shaping the information carrying signals that are sent to a user or receiver can be distinguished depending on the application of the transmitter and the level of security and/or reduction of the peak-to-average-power ratio that is required for that application.

According to a first level, the perturbation signal and the analog beamforming signal may be computed by using only channel state information. The output signal of the analog precoder may, according to this first level computation, be changed in such a way that security in the information carrying signals that is sent to the user or receiver is increased, or in other words that eavesdropper links are jeopardized. According to a second level, the perturbation signal and the analog beamforming signal may be computed by using channel state information and information from the information carrying signals. According to the second level computation, the output signal of the analog precoder may be changed in such a way that the security is increased and/or the peak-to-average-power ratio is reduced. According to a third level computation, channel state information, information from the information carrying signals and signal processing chain characterization may be used to compute the perturbation signal and the analog beamforming signal. According to the third level computation, security of the output signal of the analog precoder may be further increased and the peak-to-average-power ratio may be further reduced.

In the description below, the present disclosure will be described by means of the signal processing chain comprising a number of RF chains. It has to be understood that this is not intended to limit the disclosure in any way. RF chains, or in general signal processing chains, may comprise a digital to analog converter, analog filters, a mixer.

In a first aspect, the present disclosure provides a transmitter device 10.

Figs. 1 and 2 schematically illustrates a transmitter device 10 according to a first embodiment of the present disclosure in which at least the peak-to-average-power ratio, further referred to as PAPR, may be reduced. The transmitter device 10 may comprise a digital baseband block 1 for sending information carrying signals to a signal processing chain, in the example given thus a number of RF chains RF₁ to RF₅. The information carrying signals may, according to the first embodiment, be communication or data streams.

The transmitter device 10 further comprises an analog precoder 2 configured to receive communication or data streams from RF chains RF₁ to RF₅. The RF chains RF₁ to RF₅ convert digital communication or data streams into analog communication or data streams. According to embodiments of the present disclosure, the transmitter device 10 may comprise at least two RF chains RF₁ to RF₅.

The transmitter device 10 may further comprise at least one power amplifier 6 in between the analog precoder 2 and the at least two antennas 5. According to embodiments of the present disclosure, the number of power amplifiers 6 may be equal to the number of antennas 5 as illustrated in Fig. 1. According to these embodiments, each antenna 5 may be connected to a power amplifier 6. According to other embodiments, the number of power amplifiers 6 may be lower than the number of antennas 5. According to these embodiments, oner one more antennas 5 may be connected to a same power amplifier 6, also referred to as a sub-array architecture. The latter may be used, for example, in D-band beamforming, where the complexity may be too high to dedicate one power amplifier per antenna. Such sub-array architecture may thus be preferred for better complexity-performance trade-offs.

The analog precoder 2 is further configured to control the transmission of the communication or data streams by at least one of the at least two antennas 5. Therefore, the analog precoder 2 may be located in between the RF chains RF₁ to RF₅ and a plurality of antennas 5 of the transmitter device 10. According to embodiments of the present disclosure, the transmitter device 10 may comprise at least two antennas 5. The exact number of antennas 5 depends on the application of the transmitter device 10. According to embodiments of the present disclosure, the number of antennas 5 may be higher than the number of information carrying signals or, in the example given, the number of antennas 5 may be higher than the number of communication or data streams.

The transmitter device 10 further comprises a controller 7 configured to compute a perturbation signal PS, which may in the example given be a digital perturbation signal (further referred to as DPS signal), and an analog beamforming signal Φ. Both the DPS signal and the analog beamforming signal Φ may, according to the present example, be computed by using at least channel state information and the information carrying signals.

According to embodiments of the present disclosure, the DPS signal and the analog beamforming signal Φ may be computed by only using channel state information and the information carrying signals, in the example given communication or data streams, as illustrated in Fig. 1.

According to other embodiments of the present disclosure, the DPS signal and the analog beamforming signal Φ may be computed by using channel state information, the communication or data streams and inputs from characterization of the signal processing chain, in the example given RF chain characterization (see Fig. 2). In the RF chain characterization, analog front-end components up to the inputs of the power amplifiers 6 may be characterized. More formally, the RF chain characterization aims to model the RF chains mathematically i.e., finding the effective channel from the output of the digital baseband filtering in the precoder up to the power amplifier inputs. In particular, operations occurring in the RF chains including but not limited to e.g. digital pulse shaping filter, Analog-to-Digital converter and any Low pass analog filter are modelled.

The controller 7 is configured to send the DPS signal as one of the information carrying signals to the analog precoder 2.

The controller 7 is further configured to send the analog beamforming signal Φ to the analog precoder 2 to control the transmission of the information carrying signals by at least one of the at least two antennas 5.

Computing the DPS signal and the analog beamforming signal Φ can be done in different ways. Generally, the computing process can be seen as a constrained optimization problem, where the optimization variables are the DPS signal and the analog beamforming signal Φ. According to the present example, the goal of the optimization may, according to the present embodiment, be to at least minimise the peak-to-average-power ratio PAPR of the signal entering the power amplifiers 6 attached to the antennas 5. Whereas, the constraint of the optimization ensures that a targeted performance such as Signal to interference plus noise ratio (SINR) is achieved for the received signals. Here the SINR can be defined as: Useful signal power / (Interference causes by DPS + Inter user interference + Noise). Such a constraint ensures that the obtained PAPR reduction in this embodiment has a limited and acceptable performance degradation because of the DPS. Optimization of the DPS signal comprising maximizing the SINR, thereby minimizing, amongst other factors, DPS interference. Further, another valid constraint is on the total power radiated per antenna or the total power radiated from all the antennas. This constraint ensures that the obtained PAPR reduction in this embodiment does not cause the power radiated above the permitted threshold. An additional goal of the optimization process may further be the end-to-end performance.

The more parameters are considered in the computation of the DPS signal and the analog beamforming signal, the better the PAPR optimization and the end-to-end performance will be.

In the example given in Fig. 1 and 2, the transmitter device 10 may comprise five RF chains RF₁ to RF₅. According to further embodiments, the transmitter device 10 may have any number of RF chains 3, starting from at least 2, as required for the particular application. At least one of the RF chains 3 is, according to embodiments of the present disclosure, reserved for only sending the DPS signal to the analog precoder 2. In the example given, two RF chains RF₄ and RF₅ are reserved only for sending the DPS signal to the analog precoder 2. The remaining of the RF chains, i.e. RF₁ to RF₃, are for sending the information carrying signals to the analog precoder 2.

Thus, according to embodiments of the disclosure, the analog precoder 2 receives, first information carrying signals coming from the digital baseband block 1 via a first number of RF chains, in the example given RF chains RF₁ to RF₃, and the DPS signal as at least one second information carrying signal via a second number of RF chains, in the example given RF₄ and RF₅. The second number of RF chains is reserved for only receiving the DPS signal from the controller 7.

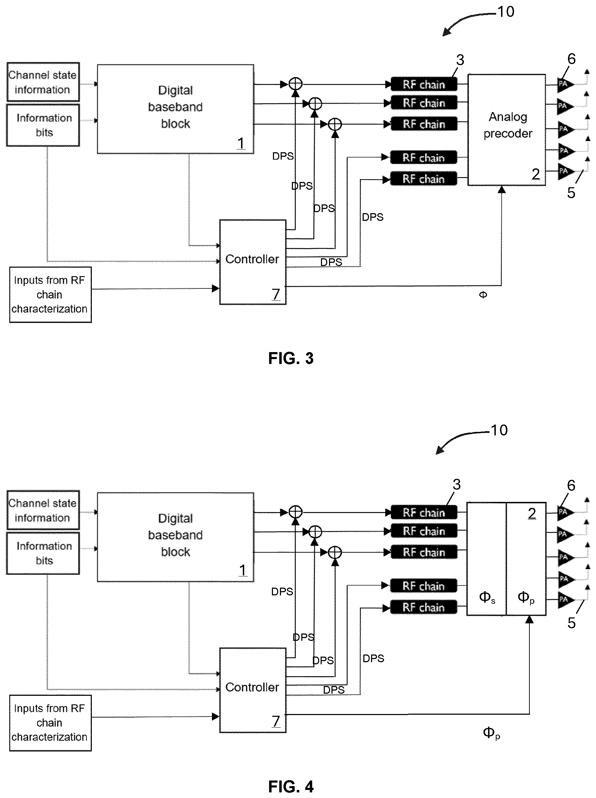

According to embodiments of the present disclosure, a further DPS signal may be sent to the other RF chains RF₁ to RF₃, instead of sending a DPS signal only to the reserved RF chains RF₄ and RF₅. This is illustrated in Fig. 3 and may be referred to as non-overlapping DPS signal.

Although this is a little more complex than for the embodiment of Figs. 1 and 2 because an additional DPS signal has to be computed, the embodiment illustrated in Fig. 3 has as an advantage that it exploits more (space) degrees of freedom, as now five RF chains may be used to transmit the DPS signal to the analog precoder 2 as opposed to only two reserved RF chains in the device of Figs. 1 and 2. This can relax, for example, the total power dedicated to the DPS signal. This may offer a better PAPR reduction and/or let the DPS signal cause less interference with the information carrying signal(s) at the user or receiver.

Further, the analog beamforming signal Φ is directly sent to the analog precoder 2. The analog beamforming signal Φ may be represented as a complex matrix of size M x (D+E), with M being the number of power amplifiers 6, D being the number of RF chains receiving the information carrying signals and E being the number of RF chains only receiving the DPS signal from the controller 7.

According to a further embodiment of the present disclosure, only a few of the columns of the analog precoder matrix Φ may be optimised. This will already result in an optimization of the output signals s(1) to s(M) of the analog precoder 2 that are sent to the power amplifiers 6. According to the present embodiment, this optimization may be in terms of at least lowering the PAPR of the output signals s(1) to s(M). The signal Φ can be decomposed into [Φs,Φp] wherein Φs is the analog precoder matrix of size M x D and Φp is the analog precoder matrix of size E x D. According to this embodiment, it can be chosen to only compute Φs during the step of obtaining channel state information based on that channel state information but optimize only Φp when computing the DPS signal and the analog beamforming signal Φ as described above. This may be referred to as non-overlapping analog precoding and is illustrated in Fig. 4. During the step of obtaining channel state information, the transmitter sends a predetermined signal to the receiver or user. Since this predetermined signal is already known by the user or receiver, it removes the predetermined signal from the received signal so that the channel state information is obtained. In the next step, the receiver or user transmits the channel state information back to the transmitter.

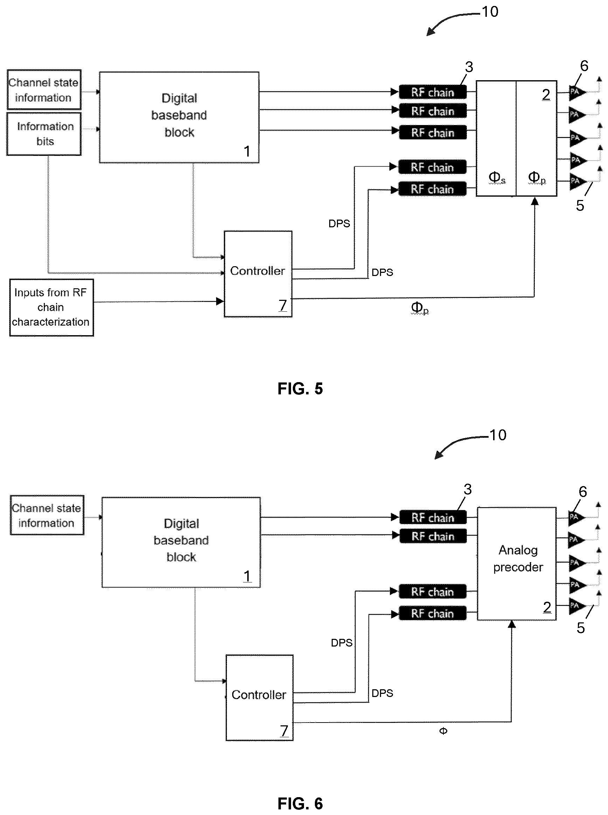

Non-overlapping precoding may, according to still further embodiments, be combined with non-overlapping DPS signal. This is illustrated in Fig. 5.

In a transmitter device 10 according to the embodiments described in Figs. 1 to 5 may have output signals with altered properties at the level of input of the power amplifiers attached to the antennas. In particular, according to the present embodiment, at least the PAPR of the signal entering the power amplifier is lowered compared to existing transmitter devices. As a result, distortions in the information carrying signals experienced by the users or receivers may significantly be reduced.

Figs. 6 to 8 schematically illustrate further embodiments of a transmitter device 10 according to the present disclosure in which at least eavesdropper links are jeopardized. According to these embodiments, the information carrying signals may be communication or data streams. A transmitter device 10 according to these embodiments comprises, similar to the embodiments described with respect to Figs. 1 to 5, also a digital baseband block 1 for sending information carrying signals to a signal processing chain, in the example given a plurality of RF chains.

The transmitter device 10 further comprises an analog precoder 2 configured to receive communication or data streams from at least two RF chains, in the example given four RF chains RF₁ to RF₄. The number of RF chains may be any suitable number starting from two, and may be any number as required for a particular application. The RF chains RF₁ to RF₄ convert the received digital communication or data streams into analog communication or data streams.

The transmitter device 10 may further comprise at least two antennas 5. The transmitter device 10 may further comprise at least one power amplifier in between the analog precoder 2 and the at least two antennas 5. According to embodiments of the present disclosure, the number of power amplifiers may be equal to the number of antennas 5. According to these embodiments, each antenna 5 may be connected to a power amplifier. According to other embodiments, the number of power amplifiers may be lower than the number of antennas 5. According to these embodiments, oner one more antennas 5 may be connected to a same power amplifier, also referred to as a sub-array architecture. The latter may be used, for example, in D-band beamforming, where the complexity may be too high to dedicate one power amplifier per antenna. Such sub-array architecture may thus be preferred for better complexity-performance trade-off.

The analog precoder 2 is further configured to control the transmission of the information carrying signals by at least one of the at least two antennas 5. The exact number of antennas 5 depends on the application of the transmitter device 10. According to embodiments of the present disclosure, the number of antennas 5 may be higher than the number of information carrying signals.

The transmitter device 10 further comprises a controller 7 configured to compute a perturbation signal PS, which may in the example given be a digital perturbation signal (further referred to as DPS signal), and an analog beamforming signal Φ. Both the DPS signal and the analog beamforming signal Φ may, according to the present embodiment, be computed by using at least channel state information of at least the user or receiver.

According to embodiments of the present disclosure, the DPS signal and the analog beamforming signal Φ may be computed by only using channel state information of the receiver or user and of at least one eavesdropper receiver, as illustrated in Fig. 6.

According to other embodiments of the present disclosure, the DPS signal and the analog beamforming signal Φ may be computed by using channel state information and the information carrying signals, e.g. communication or data streams.

According to the present embodiment, and thus to at least jeopardize eavesdropper links, different methods can be used to compute the DPS signal and the analog beamforming signal Φ. In a first method, the DPS may be a noise characterized by noise power. The analog beamforming signal Φ may be a beamforming vector towards the eavesdropper. According to a second method, the computing process can be seen as a constrained optimization problem, where the optimization variables are the DPS signal and the analog beamforming signal Φ. The goal of the optimization is to minimize the information leak to the eavesdropper. Whereas the constraint of the optimization ensures that a targeted performance such as Signal to interference plus noise ratio (SINR) is achieved for the received signals at the users. Here the SINR of the users can be defined as: Useful signal power/ (Interference causes by DPS + Inter user interference + Noise) . Such a constraint ensures that the proposed technique has a limited and acceptable performance degradation because of the DPS.

The controller 7 is configured to send the DPS signal as one of the information carrying signals to the analog precoder 2. This is done via RF chains RF₃ and RF₄ which are reserved for only transmitting the DPS signal to the analog precoder 2. The communication or data streams are, as already mentioned above, transmitted to the analog precoder 2 via RF chains RF₁ and RF₂. The controller 7 is further configured to send the analog beamforming signal Φ to the analog precoder 2 to control the transmission of the communication or data streams by at least one of the at least two antennas 5.

The analog precoder 2 is used to set the phase shifters and to precode the output signal of the RF chains. As a result, the communication or data streams that are sent to the users or receivers have an improved security against eavesdropper attacks.

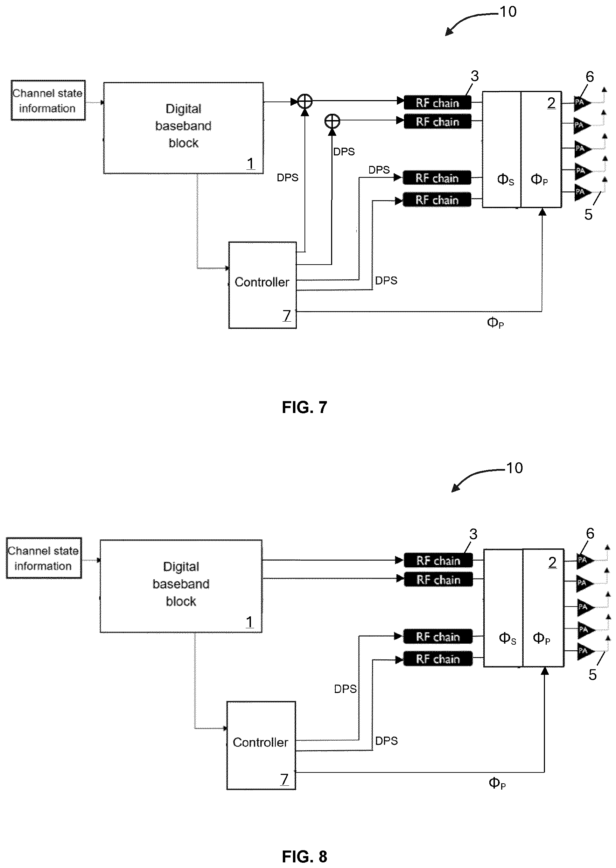

According to embodiments of the present disclosure, optimizing the communication or data streams can be done in 2 steps as depicted in Fig. 7. This may also be referred to as non-overlapping analog precoding. This will already result in an optimization of the output signals of the analog precoder 2 that are sent to the power amplifiers. According to the present embodiment, this optimization may be in terms of at least jeopardizing the eavesdropper links. The signal Φ can be decomposed into [Φs,Φp] wherein Φs is the analog precoder matrix of size M x D and Φp is the analog precoder matrix of size E x D.). According to this embodiment, it can be chosen to only compute Φs during the step of obtaining channel state information based on that channel state information but optimize only Φp when computing the DPS signal and the analog beamforming signal Φ as described above. This may be referred to as non-overlapping analog precoding. During the step of obtaining channel state information, the transmitter sends a predetermined signal to the receiver or user. Since this predetermined signal is already known by the user or receiver, it removes the predetermined signal from the received signal so that the channel state information is obtained. In the next step, the receiver or user transmits the channel state information back to the transmitter. Such constraints on the signal power leakage at eavesdroppers ensure that the proposed optimization degrades the eavesdroppers link and limited and acceptable performance degradation because of the additional DPS signals.

According to further embodiments of the present disclosure, non-overlapping DPS and non-overlapping analog precoding may be combined in one transmitter device 10. This is illustrated in Fig. 8.

According to still further embodiments of the present disclosure, an additional DPS signal may be sent by the controller 7 to be combined with the information carrying signals, e.g. communication or data streams, coming from the digital baseband block 1 before they are transmitted to the RF chains RF₁ and RF₂. An advantage hereof is that it exploits more (space) degrees of freedom, as now four RF chains may be used to transmit the DPS signal to the analog precoder 2 as opposed to only two reserved RF chains in the device of Figs. 1 and 2. This can relax, for example, the total power dedicated to the DPS signal. This may offer a better PAPR reduction and/or let the DPS signal cause less interference with the information carrying signal(s) at the user or receiver.

In the embodiments described with respect to Figs. 6 to 8, the properties of the information carrying signals are changed so as to control the transmission of the information carrying signals from the transmitter device towards the users or receivers. By doing so, the robustness of the signal against eavesdropper attacks is increased by minimizing the data leakage to eavesdropper receiver. To achieve it, at least the channel state information of the receiver or user and of at least one eavesdropper is exploited and additional RF chain resources are reserved to only transmit the DPS signal to the analog precoder 2.

A transmitter device according to the present disclosure can be implemented as described above according to the different embodiments or a combination thereof. The information carrying signals that are sent from the transmitter device towards the users or receivers may be controlled at the level of the output of the analog precoder 2 in order to have a lower PAPR and/or an improved security, depending on the application of the transmitter device and/or the type of communication device the transmitter device is part of.

In a further aspect of the present disclosure, a communication device is provided that comprises a transmission device according to the above described embodiments. Such communication device may, for example, be a mm Wave communication system, mmw radar system, radar and communication system, etc ....

In still a further aspect of the present disclosure, a method is provided to control transmission of information carrying signals from a transmitter device to at least one user or receiver. The method comprises sending first information carrying signals to an analog precoder 2 via a signal processing chain. According to embodiments of the present disclosure, the information carrying signals may comprise communication or data streams.

In a controller of the transmitter device, a perturbation signal PS, which may according to embodiments of the present disclosure be a digital perturbation signal DPS (further referred to as DPS signal) and an analog beamforming signal Φ are computed based on at least channel state information and the information carrying signals. The DPS signal is sent to the analog precoder 2 as a second information carrying signal, and the analog beamforming signal Φ is sent to the analog precoder 2 to control the transmission of the information carrying signals by at least one of at least two antennas of the transmitter device to the users or receivers.

According to embodiments of the present disclosure, computing the DPS signal and the analog beamforming signal Φ may further be based on signal processing chain characterization.

According to embodiments of the present disclosure, the method may further comprise sending an additional DPS signal to be combined with first information carrying signals before sending it to the analog precoder 2.

## Claims

1. A transmitter device comprising:
- an analog precoder configured to receive information carrying signals via a signal processing chain and to control transmission of the information carrying signals by at least one of at least two antennas, and
- a controller configured to compute a perturbation signal (PS) and an analog beamforming signal (Φ) based on at least channel state information,
wherein
- the controller is configured to send the perturbation signal (PS) as one of the information carrying signals to the analog precoder,
and
- the controller is further configured to send the analog beamforming signal (Φ) to the analog precoder to control the transmission of the information carrying signals by the at least one of the at least two antennas.

2. A transmitter device according to claim 1, wherein the controller is further configured to receive parameters of the signal processing chains and/or use information from the information carrying signals for computing the perturbation signal (PS) and the analog beamforming signal (Φ).

3. A transmitter device according to claim 1 or 2, wherein the controller is further configured to send at least one additional perturbation signal to be combined with one of the information carrying signals before sending it to the analog decoder.

4. A transmitter device according to any one of the preceding claims, wherein the number of antennas is higher than the number of information carrying signals.

5. A transmitter device according to any one of the preceding claims, further comprising at least one power amplifier in between the analog precoder and the at least two antennas.

6. A transmitter device according to any one of the preceding claims, wherein the signal processing chains comprise a plurality of RF chains.

7. A transmitter device according to any one of the preceding claims, wherein at least some of the information carrying signals are predetermined signals.

8. A transmitter device according to any one of claims 1 to 6, wherein the information carrying signals comprise communication streams.

9. A transmitter device according to claim 8 wherein the information carrying signals further comprise security streams.

10. A transmitter device according to any one of the preceding claims, wherein the perturbation signal (PS) is computed to minimize interference caused by the perturbation signal (PS) on the information carrying signals received by at least one receiver.

11. A transmitter device according to any one of the preceding claims, wherein the analog beamforming signal (Φ) is computed to transmit the perturbation signal (PS) towards an eavesdropper to distort the reception of the information carrying signals.

12. A communication system comprising a transmitter device according to any one of the preceding claims.

13. A method to control transmission of information carrying signals from a transmitter device to at least one user, the method comprising:
- sending first information carrying signals to an analog precoder via a signal processing chain,
- in a controller of the transmitter device, computing a perturbation signal (PS) and an analog beamforming signal (Φ) based on at least channel state information and the information carrying signals,
- sending the perturbation signal (PS) to the analog precoder as a second information carrying signal, and
- sending the analog beamforming signal (Φ) to the analog precoder to control the transmission of the information carrying signals by at least one of the at least two antennas.

14. A method according to claim 13, wherein computing the perturbation signal (PS) and the analog beamforming signal (Φ) is further based on signal processing chain characterization.

15. A method according to claim 13 or 14, wherein the method further comprises sending an additional perturbation signal (PS) to be combined with first information carrying signals before sending it to the analog precoder.
